# EUROPEAN PATENT APPLICATION

(11) **EP 4 712 567 A1**
(43) Date of publication of application: **18.03.2026**
(21) Application number: 23936895.4
(22) Date of filing: 12.05.2023
(51) Int. Cl.: H04W 36/24

(54) **HANDOVER PREDICTION METHOD AND APPARATUS, AND DEVICE AND STORAGE MEDIUM**

(71) Applicant: Beijing Xiaomi Mobile Software Co., Ltd., Beijing 100085 (CN)
(72) Inventor: YANG, Xing, Beijing 100085 (CN); XIONG, Yi, Beijing 100085 (CN); HONG, Wei, Beijing 100085 (CN); JIANG, Xiaowei, Beijing 100085 (CN); WU, Yumin, Beijing 100085 (CN); CHEN, Yiwen, Beijing 100876 (CN); WANG, Yixin, Beijing 100876 (CN); RUAN, Huiyuan, Beijing 100876 (CN); XIANG, Tianqi, Beijing 100876 (CN); ZHANG, Xin, Beijing 100876 (CN)
(74) Representative: Stöckeler, Ferdinand
(86) International application number: PCT/CN2023/094083
(87) International publication number: WO 2024/234205

(57) **Abstract**

Provided in the present disclosure are a handover prediction method and apparatus, and a device and a storage medium. The method comprises: receiving map information, which is sent by a second device, of a physical environment in which a user equipment (UE) is located; and predicting, according to the map information, a base station to which the UE needs to be handed over. The method of the present disclosure has both high prediction accuracy and good performance.

## Description

### TECHNICAL FIELD

The disclosure relates to the field of communication technology, and in particular to handover predicting methods, related apparatuses, related devices and related storage media.

### BACKGROUND

In a communication system, a user equipment (UE) usually hands over a base station to which the UE is connected. For example, when the UE moves from a coverage area of a current serving base station to a coverage area of another base station due to a change in location, when the communication quality of the UE decreases, or to balance the load between cells, the UE usually hands over from the current serving base station to another base station.

In the related art, before switching the base station, a switching prediction is usually performed. For example, it is predicted in advance whether the UE will switch the base station at a next time point. When the UE will switch the base station at the next time point, a target base station to which the UE will hand over at the next time point is also predicted, such that the UE may directly hand over to the target base station at the next time point, thereby ensuring the continuity and stability of the UE's communication.

However, a prediction accuracy of a handover predicting method in the related art is low.

### SUMMARY

The disclosure provides handover predicting methods, related apparatuses, related devices and related storage media.

In a first aspect, an embodiment of the disclosure provides a handover predicting method, including:
receiving map information of a physical environment in which a user equipment (UE) is located sent by a second device; and
predicting a base station to which the UE hands over based on the map information.

In a second aspect, an embodiment of the disclosure provides a handover predicting method, including:
acquiring location information of a UE and a received signal strength of the UE collected by the UE at at least one time point;
acquiring error location information and an error received signal strength based on the location information and the received signal strength;
combining the location information and the received signal strength with the error location information and the error received signal strength to obtain at least one group of combined information;
inputting the at least one group of combined information into a pre-trained third model to obtain an output result of the pre-trained third model, in which the output result of the pre-trained third model is the base station to which the UE hands over predicted by the pre-trained third model.

In a third aspect, an embodiment of the disclosure provides a handover predicting method, including:
determining map information of a physical environment in which a user equipment (UE) is located;
sending the map information to a first device.

In a fourth aspect, an embodiment of the disclosure provides a handover predicting method, including:
collecting location information and a received signal strength of a user equipment (UE) at at least one time point;
sending the location information and the received signal strength collected by the UE at the at least one time point to a first device.

In a fifth aspect, an embodiment of the disclosure provides a communication apparatus, including:
a transceiver module, configured to receive map information of a physical environment in which a user equipment (UE) is located sent by a second device; and
a processing module, configured to predict a base station to which the UE hands over based on the map information.

In a sixth aspect, an embodiment of the disclosure provides a communication apparatus, including:
a transceiver module, configured to obtain location information of a UE and a received signal strength of the UE collected by the UE at at least one time point; and
a processing module, configured to obtain error location information and an error received signal strength based on the location information and the received signal strength;
in which the processing module is further configured to combine the location information and the received signal strength with the error location information and the error received signal strength to obtain at least one group of combined information;
the processing module is further configured to input the at least one group of combined information into a pre-trained third model to obtain an output result of the pre-trained third model, and the output result of the pre-trained third model is a base station predicted by the pre-trained third model that the UE hands over to.

In a seventh aspect, an embodiment of the disclosure provides a communication device, including:
a processing module, configured to determine map information of a physical environment where a user equipment (UE) is located;
a transceiver module, configured to send the map information to a first device.

In an eighth aspect, an embodiment of the disclosure provides a communication device, including:
a processing module, configured to collect location information and a received signal strength of a user equipment (UE) at at least one time point; and
a transceiver module, configured to send the location information and the received signal strength collected by the UE at the at least one time point to a first device.

In a ninth aspect, an embodiment of the disclosure provides a communication device, including a processor. When the processor calls a computer program in a memory, the method according to any one of the first to fourth aspects is performed.

In a tenth aspect, an embodiment of the disclosure provides a communication device including a processor and a memory having a computer program stored therein. The processor is configured to execute the computer program stored in the memory to enable the communication device to perform the method according to any one of the first to fourth aspects above.

In an eleventh aspect, an embodiment of the disclosure provides a communication device including a processor and an interface circuit. The interface circuit is configured to receive code instructions and transmit the code instructions to the processor, and the processor is configured to run the code instructions to enable the communication device to perform the method according to any one of the first to fourth aspects above.

In a twelfth aspect, an embodiment of the disclosure provides a communication system. The communication system includes the communication device according to any one of the fifth aspect to the eighth aspect, the communication system includes the communication device according to the ninth aspect, the communication system includes the communication device according to the tenth aspect, or the communication system includes the communication device according to the eleventh aspect.

In a thirteenth aspect, an embodiment of the disclosure provides a computer-readable storage medium having instructions executable by the above-mentioned network device stored thereon. When the instructions are executed, a terminal performs the method according to any one of the above-mentioned first to fourth aspects.

In a fourteenth aspect, the t disclosure further provides a computer program product including a computer program. When the computer program is executed on a computer, the computer is enabled to perform the method described in any one of the first to fourth aspects above.

In a fifteenth aspect, the disclosure provides a chip system including at least one processor and an interface. The chip system is configured to support a network device to implement the functions involved in the method according to any one of the first aspect to the fourth aspect, for example, determining or processing at least one of the data and information involved in the above method. In a design, the chip system also includes a memory. The memory is configured to store computer programs and data necessary for the source and auxiliary nodes. The chip system may be composed of chips. Or the chip system may include a chip and other discrete devices.

In a sixteenth aspect, the disclosure provides a computer program. When the computer program is executed on a computer, the computer is enabled to perform the method according to any one of the first to fourth aspects above.

### BRIEF DESCRIPTION OF THE DRAWINGS

The above and/or additional aspects and advantages of the disclosure will become apparent and easily understood from the following description of the embodiments in conjunction with the accompanying drawings.
FIG. 1 is a schematic diagram illustrating the architecture of a communication system according to an embodiment of the disclosure.
FIG. 2A is a schematic flowchart illustrating a handover predicting method according to another embodiment of the disclosure.
FIG. 2B is a schematic flowchart illustrating a handover predicting method according to another embodiment of the disclosure.
FIG. 3A is a schematic flowchart illustrating a handover predicting method according to still another embodiment of the disclosure.
FIG. 3B is a flowchart illustrating a process for training a first model according to an embodiment of the disclosure.
FIG. 4A is a schematic flowchart illustrating a handover predicting method according to yet another embodiment of the disclosure.
FIG. 4B is a flowchart illustrating a process for training a second model according to an embodiment of the disclosure.
FIG. 5 is a schematic flowchart illustrating a handover predicting method according to yet another embodiment of the disclosure.
FIG. 6A is a schematic flowchart illustrating a handover predicting method according to yet another embodiment of the disclosure.
FIG. 6B is a flowchart illustrating a process for training a third model according to an embodiment of the disclosure.
FIG. 6C is a block diagram illustrating how to select a TTI according to an embodiment of the disclosure.
FIG. 7 is a schematic flowchart illustrating a handover predicting method according to yet another embodiment of the disclosure.
FIG. 8 is a schematic flowchart illustrating a handover predicting method according to yet another embodiment of the disclosure.
FIG. 9 is a schematic diagram illustrating the structure of a communication device according to an embodiment of the disclosure.
FIG. 10 is a schematic diagram illustrating the structure of a communication device according to an embodiment of the disclosure.
FIG. 11 is a schematic diagram illustrating the structure of a communication device according to an embodiment of the disclosure.
FIG. 12 is a schematic diagram illustrating the structure of a communication device according to an embodiment of the disclosure.
FIG. 13 is a block diagram illustrating a communication device according to an embodiment of the disclosure.
FIG. 14 is a schematic diagram illustrating the structure of a chip according to an embodiment of the disclosure.

### DETAILED DESCRIPTION

Example embodiments will be described in detail herein, examples of which are shown in the accompanying drawings. When the following description refers to the drawings, unless otherwise indicated, the same numbers in different drawings represent the same or similar elements. The implementations described in the following example embodiments do not represent all implementations consistent with the embodiments of the disclosure. Instead, they are merely examples of devices and methods consistent with some aspects of the embodiments of the disclosure as detailed in the appended claims.

The terms used in embodiments of the disclosure are only for the purpose of describing specific embodiments and are not intended to limit the embodiments of the disclosure. The singular forms of "a", "an" and "the" used in the embodiments of the disclosure and the appended claims are also intended to include plural forms unless the context clearly indicates other meanings. It should also be understood that the term "and/or" used herein refers to and includes any or all possible combinations of one or more associated listed items.

It should be understood that although the terms "first", "second", "third", etc. may be used to describe various information in the embodiments of the disclosure, these information should not be limited to these terms. These terms are only used to distinguish the same type of information from each other. For example, without departing from the scope of the embodiments of the disclosure, the "first information" may also be referred to as the "second information", and similarly, the "second information" may also be referred to as the "first information". Depending on the context, the words "if" as used herein may be interpreted as "at", "when" or "in response to determining".

Embodiments of the disclosure are described in detail below, and examples of the embodiments are shown in the accompanying drawings, in which the same or similar reference numerals throughout represent the same or similar elements. The embodiments described below with reference to the accompanying drawings are illustrative and are intended to be used to explain the disclosure, and cannot be understood as limiting the disclosure.

In the related art, a handover predicting method may include the following.

### Method 1: Handover prediction based on user equipment (UE) location information.

For example, location information of a UE may be obtained in real time, a movement trajectory of the UE may be determined based on the location information of the UE, and the handover prediction may be performed based on the movement trajectory of the UE. For example, if a current serving base station of the UE is base station A, and the movement trajectory of the UE determined based on the location information of the UE is: moving towards a coverage area of base station B, at this time, if it is determined based on the location information of the UE that the UE is currently close to a boundary of the coverage area of base station A, then it is determined that the UE needs to switch the base station at a next time point, and the target base station to which the UE hands over to at the next time point is: base station B.

### Method 2: Handover prediction based on a received signal strength of UE.

For example, the received signal strength of a current serving base station and the received signal strength of an adjacent base station may be detected in real time, and whether to trigger the handover to a next position may be determined based on changes. For example, if it is determined that the received signal strength of the current serving base station A of the UE changes from strong to weak, and the received signal strength of the adjacent base station B of the UE changes from weak to strong, then it is determined that the UE needs to hand over base stations at the next time point, and the target base station to which the UE hands over to at the next time point is: base station B.

However, in the above method 1, the location information cannot contain channel fading information that changes in real time, and has poor robustness to sudden changes and interference in the propagation environment and lacks timeliness. At the same time, the accuracy of the location information itself is also greatly affected by the surrounding environment and fluctuates greatly. When the handover prediction is performed based on the location information containing large errors, the prediction accuracy and performance will be reduced. In addition, in the above method 2, due to the complexity of wireless propagation, the numerous interference factors, and the unstable change pattern of the received signal strength, the actual handover prediction result and the handover decision are often not optical schemes due to factors such as multipath and non-line-of-sight caused by the environment. At the same time, in order to accurately simulate the change pattern of signal strength, the amount of data required for prediction will be relatively large, resulting in reduced prediction efficiency.

In view of the above, the disclosure provides handover predicting methods.

In order to better understand the handover predicting methods according to embodiments of the disclosure, the communication system to which embodiments of the disclosure are applicable is first described below.

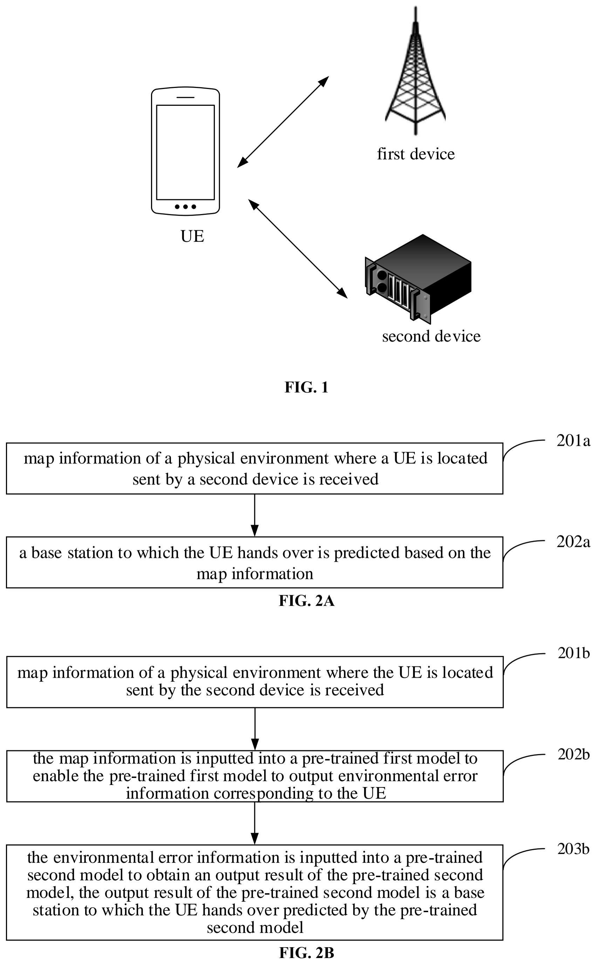

FIG. 1 is a schematic diagram illustrating the architecture of a communication system according to an embodiment of the disclosure. The communication system may include but is not limited to at least one first device, at least one second device and at least one UE. The first device may be a network device or a data analysis server. The second device may be a global navigation satellite system (GNSS) or a sensor. In addition, the number and form of devices illustrated in FIG. 1 are only used for example and do not constitute a limitation on embodiments of the disclosure. The communication system may include one or more first devices, or one or more second devices, or one or more UEs. The communication system is illustrated in FIG. 1 by taking one first device which is a network device, one second device which is a GNSS, and one UE as an example.

It should be noted that the technical solutions of embodiments of the disclosure may be applied to various communication systems, such as long term evolution (LTE) system, fifth generation (5G) mobile communication system, 5G new radio (NR) system, or other future new mobile communication systems.

The UE in embodiments of the disclosure may be an entity on the user side for receiving or transmitting signals, such as a mobile phone. The UE may also be referred to as a terminal, terminal equipment, mobile station (MS), mobile terminal (MT), etc. The GNSS may be a vehicle with communication function, a smart vehicle, a mobile phone, a wearable device, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. Embodiments of the disclosure do not limit the specific technology and specific device form adopted by the terminal.

The network device in embodiments of the disclosure may be an entity on the network side for transmitting or receiving signals. For example, the network device may be an evolved NodeB (eNB), a transmission reception point (TRP), a Radio Remote Head (RRH), a next generation NodeB (gNB) in an NR system, a base station in other future mobile communication systems, or an access node in a wireless fidelity (WiFi) system. Embodiments of the disclosure do not limit the specific technology and specific device form adopted by the base station. The base station according to embodiments of the disclosure may be composed of a centralized unit (CU) and a distributed unit (DU). The CU may also be referred to as a control unit. The CU-DU structure may be used for splitting the base station, such as the protocol layer of the base station, the functions of some protocol layers are placed in the CU for centralized control, and the functions of the remaining part or all of the protocol layers are distributed in the DU. The DU is centrally controlled by the CU.

It may be understood that the communication system according to embodiments of the disclosure is for the purpose of more clearly illustrating the technical solution of embodiments of the disclosure and does not constitute a limitation on the technical solution according to embodiments of the disclosure. The skilled in the art may know that with the evolution of the system architecture and the emergence of new business scenarios, the technical solution according to embodiments of the disclosure is also applicable to similar technical problems.

In addition, in order to facilitate understanding of embodiments of the disclosure, the following explanation is provided.

First, in the disclosure, in the absence of contradiction, each step in any implementation or example may be implemented as an independent example, and the steps may be arbitrarily combined. For example, a solution after removing some steps in a certain implementation or example may also be implemented as an independent example, and the order of the steps in a certain implementation or example may be arbitrarily exchanged. In addition, the optional methods or optional examples in a certain implementation or example may be arbitrarily combined. In addition, various implementations or examples may be arbitrarily combined. For example, some or all steps of different implementations or examples may be arbitrarily combined, and a certain implementation or example may be arbitrarily combined with the optional methods or optional examples of other implementations or examples.

Second, regarding the terms in the disclosure such as "A or B", "A and/or B", "at least one of A and B", "performing A in one case, and performing B in another case", "in response to one case, performing A, and in response to another case, performing B", at least one of the following schemes may be included depending on situations: performing A independently of B (that is, performing A in some embodiments); performing B independently of A (that is, performing B in some embodiments); selecting one from A and B to perform (that is, selectively performing A or B in some embodiments); performing both A and B (that is, performing A and B in some embodiments).

Third, each element, each row, or each column in the table involved in the disclosure may be implemented as an independent embodiment, and the combination of any elements, any rows, and any columns may also be implemented as an independent embodiment.

Fourth, in some implementations or examples, "including A", "comprising A", "used to indicate A" and "carrying A" in the disclosure may be interpreted as directly carrying A or indirectly indicating A.

Fifth, in some implementations or examples, "in response to ...", "in the case of ...", "at the time of ...", "when ...", "if ...", "in the case where ...", etc. in the disclosure may be used interchangeably.

FIG. 2A is a flowchart illustrating a handover predicting method according to an embodiment of the disclosure. The method is performed by a first device. As illustrated in FIG. 2A, the handover predicting method may include the following.

At step 201a, map information of a physical environment where a UE is located sent by a second device is received.

For example, in some embodiments, the first device may include at least one of: a network device (such as a base station), a data analysis server, a high-precision mobile communication signal measurement instrument, a high-precision mobile communication signal testing terminal; or a device with a positioning capability, such as a device that may collect environmental information based on cameras or LIDAR to locate and reconstruct a map.

For example, in some embodiments, the second device may include at least one of: a global navigation satellite system (GNSS) or a sensor.

For example, in some embodiments, the above-mentioned "map information" may be acquired by the second device and sent to the first device. For example, the method for acquiring the map information by the second device may include the following. The second device acquires the map information by locating the UE and collecting physical environment around the UE. For example, the second device may collect the map information of the physical environment in which the UE is located by using a laser radar in combination with a GNSS. For example, the map information may be, for example, a 3-dimentional (3D) map.

At step 202a, a base station to which the UE hands over is predicted based on the map information.

For example, in some embodiments, the above-mentioned "the base station to which the UE hands over is predicted based on the map information" may include the following.

At a first step, the map information is inputted into a pre-trained first model, such that the first model outputs environmental error information corresponding to the UE.

For example, the first model may be deployed in the first device. The specific training process of the first model will be described in subsequent embodiments. The first model may be, for example, a map neural network (MAPNN) model. The first model may include, for example, a convolutional neural network (CNN).

For example, in some embodiments, the above-mentioned "environmental error information" may reflect: collection-related errors caused by the physical environment around the UE during the process of collecting information by the UE. For example, the environmental error information may reflect: an error between the location information collected by the UE and the actual location information of the UE, or an error between the received signal strength (e.g., reference signal receiving power (RSRP)) collected by the UE and the actual received signal strength of the UE.

For example, in some embodiments, the first model outputs the environmental error information of the UE such that the first device may subsequently predict the base station to which the UE hands over based on the environmental error information. For example, since the first model in embodiments of the disclosure may include a CNN which is able to efficiently process map or environmental image data and accurately extract error features, the environmental error information outputted by the first model may be more accurate, thereby ensuring the accuracy of the prediction when the handover prediction is subsequently performed based on the environmental error information outputted by the first model.

For example, in some embodiments, at least one first model may be deployed on the first device. Different first models correspond to different physical environments, such that respective environmental error information of different physical environments is outputted. For example, the physical environments may include, for example, a home environment, a shopping mall environment, a field environment, a street environment, or the like.

For example, in some embodiments, the above-mentioned "inputting the map information into the pre-trained first model" may include: inputting the map information into the pre-trained first model corresponding to the physical environment of the map information.

For example, three first models may be deployed on the first device, namely, first model #1, first model #2, and first model #3, the physical environment corresponding to the first model #1 is the home environment, the physical environment corresponding to the first model #2 is the shopping mall environment, and the physical environment corresponding to the first model #3 is the street environment. In this case, if the user is currently holding the UE in a shopping mall, after the first device obtains the map information of the physical environment where the UE is located collected by the second device, the first device may determines that the UE is currently in the shopping mall environment based on the map information, and may input the map information into the pre-trained first model #2 to output the environmental error information of the UE.

It may be seen that in embodiments of the disclosure, respective first models are set for different physical environments, such that the environmental error information of each physical environment may be accurately extracted, thereby further ensuring the prediction accuracy of the subsequent handover prediction based on the environmental error information. In addition, since the first model in embodiments of the disclosure corresponds to the physical environment one-to-one, the first model does not need to take into account all physical environments, and thus the structure of the first model will be simpler, making the prediction efficiency higher.

At a second step, the environmental error information is inputted into a pre-trained second model to obtain an output result of the pre-trained second model. The output result of the pre-trained second model is the base station predicted by the pre-trained second model that the UE hands over to.

For example, the second model may be deployed in the first device, and the second model may be used for predicting the base station to which the UE hands over at a next time point. For example, in some embodiments, in a case where the base station to which the UE hands over predicted by the pre-trained second model is the same as a current serving base station of the UE, it means that the UE does not need to switch the base station at the next time point. In a case where the base station to which the UE hands over predicted by the second model is different from the current serving base station of the UE, it means that the UE needs to switch the base station at the next time point. In addition, the first device may send the output result of the pre-trained second model to the UE such that the UE switches the base station based on the base station predicted by the pre-trained second model.

The specific training process of the second model will be described in subsequent embodiments. For example, the second model may be, for example, a Long Short-Term Memory (LSTM) model.

It may be seen from the above content that in the handover predicting method according to embodiments of the disclosure, the first model and the second model will be pre-trained and arranged in the first device. The first model is used for outputting the environmental error information of the UE, and the second model is used for predicting the base station to which the UE hands over. In addition, the first device may receive the map information of the physical environment in which the UE is currently located sent by the second device, the first device may use the first model to determine the current environmental error information of the UE based on the map information, and the first device may determine the base station to which the UE hands over based on the second model and the current environmental error information of the UE. It may be seen that in the method of the disclosure, the first device predicts the base station to which the UE hands over based on the map information of the physical environment in which the UE is located. That is, in predicting the base station to which the UE hands over by the first device, the environmental factors of the physical environment around the UE are fully taken into account such that the predicted base station may be most suitable for the UE to hand over in the physical environment in which the UE is currently located, thereby improving the accuracy and performance of the handover prediction and further ensuring the communication quality of the UE.

In addition, it should be noted that, in some embodiments, an application scenario of the method of the embodiments of FIG. 2 may be: the UE cannot collect the location information of the UE and/or the received signal strength of the UE. For example, it may be known from the above introduction to the related art that the location information of the UE and/or the received signal strength of the UE may be used for handover prediction. However, in the communication system, there is usually a situation where "the UE cannot collect the location information of the UE and/or the received signal strength of the UE", which results in the inability to perform handover prediction. In the handover predicting method according to embodiments related to FIG. 2 of the disclosure, the handover prediction is performed based on the map information of the UE, without acquiring the location information of the UE and/or the received signal strength of the UE. Therefore, even if the UE cannot collect the location information of the UE and/or the received signal strength of the UE, the method of embodiments related to FIG. 2 may also be used to implement handover prediction for the UE, which has a wider applicability and lower restrictions. At the same time, the handover predicting method of the disclosure does not need to simulate a change pattern of the received signal strength as in the method of the related art, and thus the calculation amount required for prediction is low and the prediction efficiency is high.

In conclusion, with the handover predicting method according to embodiments of the disclosure, the first device may receive the map information, sent by the second device, of the physical environment in which the UE is located and predict the base station to which the UE hands over based on the map information. It may be seen that the handover predicting method according to the disclosure predicts the base station to which the UE hands over based on the map information of the physical environment in which the UE is located, which may fully take into account the environmental factors of the physical environment around the UE, such that the accuracy and performance of the handover prediction may be high. At the same time, in the handover predicting method according to the disclosure, there is no need to use the location information of the UE and/or the received signal strength of the UE. Therefore, even if the UE cannot collect the location information of the UE and/or the received signal strength of the UE, the handover prediction may be implemented for the UE, which has a wide applicability and low restrictions. At the same time, in the handover predicting method according to the disclosure, there is no need to simulate a changing pattern of the received signal strength, such that the calculation amount required for the prediction is low and the prediction efficiency is high.

FIG. 2B is a flowchart illustrating a handover predicting method according to an embodiment of the disclosure. The method is performed by a first device. As illustrated in FIG. 2B, the handover predicting method may include the following.

At step 201b, map information of a physical environment where the UE is located sent by the second device is received.

At step 202b, the map information is inputted into a pre-trained first model such that the pre-trained first model outputs environmental error information corresponding to the UE.

At step 203b, the environmental error information is inputted into a pre-trained second model to obtain an output result of the pre-trained second model. The output result of the pre-trained second model is a base station to which the UE hands over predicted by the pre-trained second model.

For details of steps 201b to 203b, reference may be made to the above embodiments.

In conclusion, in the handover predicting method according to embodiments of the disclosure, the first device receives the map information of the physical environment where the UE is located sent by the second device, and input the map information into the pre-trained first model, such that the pre-trained first model outputs the environmental error information corresponding to the UE. The first model is pre-trained. The first device may input the environmental error information into the pre-trained second model to obtain the output result of the pre-trained second model. The output result of the pre-trained second model is the base station to which the UE hands over predicted by the second model. The second model is pre-trained. It may be seen that the handover predicting method according to the disclosure predicts the base station to which the UE hands over based on the map information of the physical environment in which the UE is located, which may fully take into account the environmental factors of the physical environment around the UE, such that the accuracy and performance of the handover prediction may be high. At the same time, in the handover predicting method according to the disclosure, there is no need to use the location information of the UE and/or the received signal strength of the UE. Therefore, even if the UE cannot collect the location information of the UE and/or the received signal strength of the UE, the handover prediction may be implemented for the UE, which has a wide applicability and low restrictions. At the same time, in the handover predicting method according to the disclosure, there is no need to simulate a changing pattern of the received signal strength, such that the calculation amount required for the prediction is low and the prediction efficiency is high.

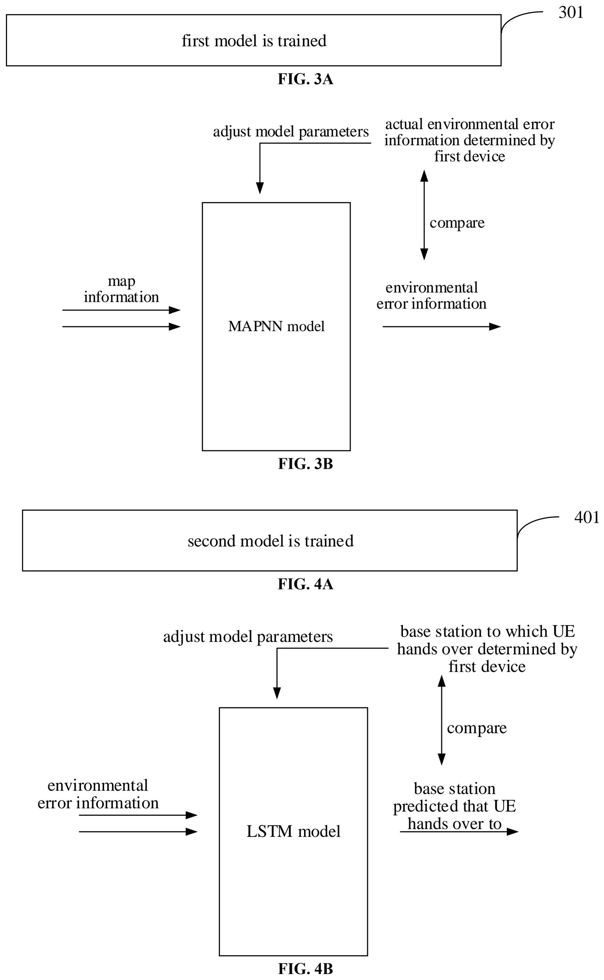

FIG. 3A is a flowchart illustrating a handover predicting method according to an embodiment of the disclosure. The method is performed by a first device. As illustrated in FIG. 3A, the handover predicting method may include the following.

At step 301, a first model is trained.

For example, in some embodiments, the method for training the first model may include the following.

At step a, location information of the UE and a received signal strength of the UE collected by the first device at at least one time point are obtained.

It should be understood that due to its high hardware configuration, the first device may overcome environmental errors well in collecting the location information and the received signal strength, to collect high-precision location information and high-precision received signal strength, such that the location information of the UE and the received signal strength of the UE collected at the at least one time point should be the closest to the actual location information of the UE and the actual received signal strength of the UE. Therefore, the location information collected by the first device and the first received signal strength collected by the first device may be used as ground truth to adjust model parameters of the first model based on the ground truth in training the first model later.

At step b, location information of the UE and a received signal strength of the UE collected by the UE at at least one time point are obtained.

For example, the UE may collect its location information and its received signal strength at the at least one time point, and send the collected location information and the collected received signal strength to the first device. It should be noted that in some embodiments, due to its low hardware configuration, the UE cannot overcome the environmental error well in collecting the location information and the received signal strength, resulting in low collection accuracy of the UE, such that the location information and the received signal strength collected by the UE will have errors relative to the actual location information of the UE and the actual received receiving strength of the UE. Based on this, in embodiments of the disclosure, by obtaining the location information of the UE and the received signal strength of the UE collected by the above-mentioned first device at the at least one time point and by obtaining the location information of the UE and the received signal strength of the UE collected by the UE at the at least one time point, the actual environmental error is calculated based on the location information and the received signal strength collected by the first device, and based on the location information and the received signal strength collected by the UE, which is used for subsequent training of the first model.

For example, in some embodiments, the method of collecting the received signal strength by the UE may include the following. The UE periodically collects its received signal strengths at multiple time points, selects stable values of the received signal strengths that does not change dramatically over time, and sends them to the first device.

For example, in some embodiments, the method of collecting the location information by the UE may include at least one of the following.

The time difference of arrival (TDoA) positioning method is used to obtain the location information of the UE.

The angle of arrival (AoA) positioning method is used to obtain the location information of the UE.

The GNSS database is used to obtain the location information of the UE.

The location information of the UE is obtained based on a wireless fidelity (WiFi) location fingerprint method.

For example, the above-mentioned TDoA positioning method, AoA positioning method, and method for obtaining the location information of the UE from a GNSS database may be used to collect the location information of the UE in outdoor scenarios; while the above-mentioned WiFi location fingerprint method may be used to collect the location information of the UE in indoor scenarios.

For example, by collecting the location information of the UE and the received signal strength of the UE through the above methods, the collection accuracy of the UE may be ensured as much as possible.

For example, in some embodiments, the method of sending the location information of the UE and the received signal strength of the UE to the first device may include the following. The UE determines the location information of the UE and the received signal strength of the UE at each time point in real time. After the UE determines the location information of the UE and the received signal strength of the UE at a current time point, the UE starts to send the location information of the UE and the received signal strength of the UE of the current time point to the first device at the current time point. After the UE determines the location information of the UE and the received signal strength of the UE at a next time point, the UE starts to send the location information of the UE and the received signal strength of the UE of the next time point to the first device at the next time point. Each time point corresponds to a transmission time interval (TTI), and the TTI is used in transmitting the location information of the UE and the received signal strength of the UE at the corresponding time point.

At step c, location information collected by the UE at the at least one time point is added to a first error offset value respectively to obtain respective error location information.

For example, the first error offset value may be pre-calculated. For example, the first error offset value may reflect errors caused by environmental interference, multipath, and positioning deviation. In some embodiments, the first error offset values corresponding to location information at different time points may be the same or different.

For example, in some embodiments, the location information transmitted in the TTI corresponding to the current time point and the location information transmitted in the TTIs corresponding to N time points before the current time point may be added with the first error offset value respectively to obtain the error location information at the current time point and respective error location information at N time points before the current time point. N is a positive integer.

At step d, the received signal strength at the at least one time point collected by the UE is added to a second error offset value respectively to obtain respective error received signal strengths.

For example, the second error offset value may be pre-calculated. For example, the second error offset value may reflect errors caused by environmental interference, multipath, and positioning deviation. In some embodiments, the second error offset value added to the respective received signal strengths at different time points may be the same or different.

For example, in some embodiments, the received signal strength transmitted in the TTI corresponding to the current time point and the received signal strengths transmitted in the TTIs corresponding to N time points before the current time point may be added respectively with the second error offset value to obtain the error received signal strength at the current time point and respective error received signal strengths at N time points before the current time point. N is a positive integer.

At step e, actual environmental error information corresponding to the UE is determined based on the location information collected by the first device, the received signal strength collected by the first device, the location information collected by the UE, the received signal strength collected by the UE, the respective error location information, and the respective error received signal strengths.

For example, the actual environmental error information may be a combination of at least one of: a difference between the location information collected by the first device and the location information collected by the UE, a difference between the location information collected by the first device and the error location information, a difference between the location information collected by the first device and the received signal strength collected by the UE, or a difference between the location information collected by the first device and the error received signal strength.

At step f, the map information corresponding to the UE is inputted into a pre-built first model to obtain an output result of the pre-built first model.

At step g, a first loss value between the output result of the pre-built first model and the actual environmental error information is calculated.

For example, the first loss value reflects a gap between the output result of the pre-built first model and the actual environmental error information. For example, the smaller the first loss value is, the smaller the gap between the output result of the pre-built first model and the actual environmental error information is.

At step h, model parameters of the pre-built first model (such as the number of network layers, network node scale or learning rate of the model) are adjusted based on the first loss value until the output result of the pre-built first model meets a first preset condition, and it is determined that training of the first model is completed.

For example, the first preset condition may include the first loss value between the output result of the pre-built first model and the actual environmental error information being less than a first threshold. The first threshold may be 1 dB, for example.

For example, in a case where the first loss value between the output result of the pre-built first model and the actual environmental error information is less than the first threshold, it means that the output result of the pre-built first model is infinitely close to the actual environmental error information. At this time, it is considered that the first model may accurately extract the environmental error information corresponding to the map information of the physical environment where the UE is located, and then it is confirmed that the training of the first model is completed.

It should be noted that, in some embodiments, since different first models correspond to different physical environments, in training the first model in step 301, corresponding first models may be trained respectively for different physical environments.

Based on the above steps f to h, FIG. 3B provides a flowchart of training a first model according to an embodiment of the disclosure. As illustrated in FIG. 3B, the map information may be input into the pre-trained first model (i.e., a MAPNN model) to output the environmental error information. Thereafter, the environmental error information output by the MAPNN model is compared with the actual environmental error information determined by the first device, and the model parameters are adjusted based on a comparison result until the output result of the first model meets the first preset condition.

In conclusion, the disclosure provides a method for training the first model, which is usable by the first device for training the first model that may extract the environmental error information of the UE. The trained first model used by the first device may output the environmental error information of the UE based on the map information of the physical environment in which the UE is located, such that the first device may subsequently accurately predict the base station to which the UE hands over based on the environmental error information of the UE, thereby improving the accuracy and performance of the handover prediction.

FIG. 4A is a flowchart illustrating a handover predicting method according to an embodiment of the disclosure. The method is performed by a first device. As illustrated in FIG. 4, the handover predicting method may include the following.

At step 401, a second model is trained.

For example, in some embodiments, the method for training the second model may include the following.

At step 1, environmental error information corresponding to the UE is determined using the pre-trained first model.

For example, the map information of the environment in which the UE is located, obtained by the first device from the second device, may be inputted into the trained first model to obtain the environmental error information corresponding to the UE.

At step 2: the first device determines the base station to which the UE hands over based on the location information of the UE collected by the first device and/or the received signal strength of the UE collected by the first device at the at least one time point.

For example, for the method of determining the base station to which the UE hands over by the first device based on the location information and/or the received signal strength, reference may be made to the description of the above method 1 and method 2, which is not described in detail here.

For example, since the first device has a high accuracy in collecting the location information of the UE and/or the received signal strength of the UE at the at least one time point, the base station to which the UE hands over determined by the first device in the step 2 may be understood as: the base station most suitable for the UE to hand over to is determined, and the first device may subsequently adjust the model parameters of the second model based on the base station determined by the first device to realize training of the second model.

At step 3, the environmental error information is inputted into the pre-built second model to obtain the output result of the pre-built second model.

For example, in some embodiments, the output result of the pre-built second model may be: a base station to which the UE hands over predicted by the pre-built second model based on the environmental error information.

At step 4, a first accuracy value between the output result of the pre-built second model and the base station determined by the first device is calculated.

For example, in some embodiments, the first accuracy value may reflect: a degree of similarity between the output result of the pre-built second model and the base station determined by the first device. The higher the first accuracy value, the closer the output result of the pre-built second model is to the base station determined by the first device.

At step 5, the model parameters of the pre-built second model are adjusted based on the first accuracy value until the output result of the pre-built second model meets a second preset condition, and it is determined that training of the second model is completed.

For example, in some embodiments, the second preset condition may include: the first accuracy value between the output result of the pre-built second model and the base station determined by the first device being greater than a second threshold. The second threshold may be, for example, 90%.

For example, in a case where the first accuracy value between the output result of the pre-built second model and the base station determined by the first device is greater than the second threshold, it means that the output result of the pre-built second model is infinitely close to the base station determined by the first device. At this time, it is considered that the second model may accurately predict the base station most suitable for the UE, and it is confirmed that the training of the second model is completed.

Based on the above steps 3 to 5, FIG. 4B provides a flowchart of training a second model according to an embodiment of the disclosure. As illustrated in FIG. 4B, the environmental error information may be input into the pre-trained second model (i.e., an LSTM model) such that the LSTM model outputs the predicted base station to which the UE hands over. Afterwards, the base station predicted by the LSTM model is compared with the base station to which the UE hands over determined by the first device, and the model parameters are adjusted based on a comparison result until the output result of the second model meets the second preset condition.

In conclusion, the disclosure provides a method for training the second model, which is usable by the first device to train the second model that may accurately predict the base station to which the UE hands over. The first device may then use the trained second model to perform an accurate handover prediction, thereby improving the accuracy and performance of the handover prediction.

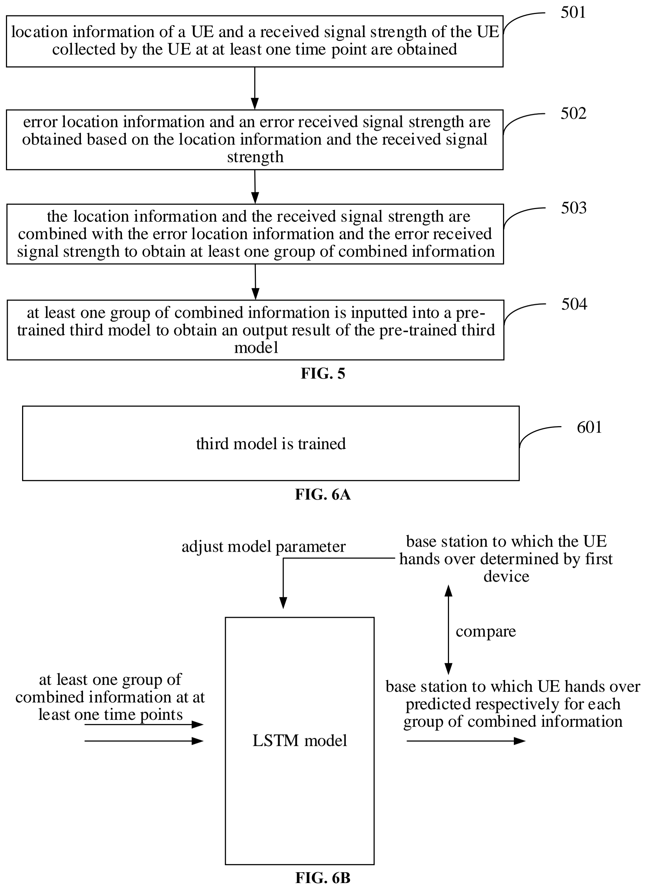

FIG. 5 is a flowchart illustrating a handover predicting method according to an embodiment of the disclosure. The method is performed by a first device. As illustrated in FIG. 5, the handover predicting method may include the following.

At step 501, location information of a UE and a received signal strength of the UE collected by the UE at at least one time point are obtained.

For example, the UE may collect its location information and its received signal strength at the at least one time point, and may send the collected location information and the collected received signal strength to the first device.

For example, in some embodiments, the method of sending the location information and the received signal strength by the UE to the first device may include the following. The UE determines the location information of the UE and the received signal strength of the UE at each time point in real time. After the UE determines the location information of the UE and the received signal strength of the UE at a current time point, the UE starts to send the location information of the UE and the received signal strength of the UE of the current time point to the first device at the current time point. After the UE determines the location information of the UE and the received signal strength of the UE at a next time point, the UE starts to send the location information of the UE and received signal strength of the UE of the next time point to the first device at the next time point. Each time point corresponds to a respective TTI. The TTI is used in transmitting the location information of the UE and the received signal strength of the UE at a corresponding time point.

At step 502, error location information and an error received signal strength are obtained based on the location information and the received signal strength.

For example, in some embodiments, the above-mentioned "obtaining the error location information and the error received signal strength based on the location information and the received signal strength " may include the following. The location information collected by the UE at the at least one time point is added to the first error offset value respectively to obtain respective error location information and the received signal strength collected by the UE at the at least one time point is added to the second error offset value respectively to obtain respective error received signal strengths. For the first error offset value and the second error offset value, reference may be made to the above-mentioned embodiments.

For example, in some embodiments, the location information transmitted in the TTI corresponding to a current time point and the location information transmitted in the TTIs corresponding to N time points before the current time point may be added respectively with the first error offset value to obtain the error location information at the current time point and respective error location information at N time points before the current time point. N is a positive integer.

For example, in some embodiments, the received signal strength transmitted in the TTI corresponding to the current time point and the received signal strengths transmitted in the TTIs corresponding to N time points before the current time point may be added respectively with the second error offset value to obtain the error received signal strength at the current time point and the respective error received signal strengths at N time points before the current time point. N is a positive integer.

For example, in some embodiments, respective location information, respective received signal strengths, respective error location information, and respective error received signal strengths at the current time point and the N time points are obtained such that the handover prediction may be performed based on this information later. Since the information acquired at each time point in embodiments of the disclosure is relatively comprehensive, the prediction accuracy will be higher. Therefore, the value of N may be appropriately reduced to appropriately reduce the amount of calculation during the handover prediction and to improve the prediction efficiency while ensuring the prediction accuracy.

At step 503, the location information and the received signal strength are combined with the error location information and the error received signal strength to obtain at least one group of combined information.

For example, the method of "combining the location information and the received signal strength at each time point with the error location information and the error received signal strength at each time point to obtain at least one group of combined information" may include at least one of:
combining the location information and the received signal strength at the same time to obtain a first group of combined information;
combining the location information and the error received signal strength at the same time to obtain a second group of combined information;
combining the error location information and the received signal strength at the same time to obtain a third group of combined information;
collecting the error location information and the error received signal strength at the same time to obtain a fourth group of combined information.

At step 504, at least one group of combined information is inputted into a pre-trained third model to obtain an output result of the pre-trained third model.

For example, the third model may be deployed in the first device, and the third model may be used to predict the base station to which the UE hands over at the next time point. The output result of the pre-trained third model may be a respective output result corresponding to each group of combined information. The output result corresponding to each group of combined information may be understood as: the base station to which the UE hands over predicted by the third model based on each group of combined information. For example, the output results corresponding to different groups of combined information outputted by the pre-trained third model are close to each other. The output result corresponding to any group of combined information may be used as the base station predicted by the pre-trained third model that the UE hands over to.

For example, assuming that the first group of combined information, the second group of combined information, the third group of combined information, and the fourth group of combined information are inputted into the pre-trained third model in the above step 503, the pre-trained third model may output the output result corresponding to the first group of combined information, the output result corresponding to the second group of combined information, the output result corresponding to the third group of combined information, and the output result corresponding to the fourth group of combined information. The output result corresponding to the first group of combined information, the output result corresponding to the second group of combined information, the output result corresponding to the third group of combined information, and the output result corresponding to the fourth group of combined information are close to each other, and any one of the output result corresponding to the first group of combined information, the output result corresponding to the second group of combined information, the output result corresponding to the third group of combined information, and the output result corresponding to the fourth group of combined information may be used as the base station predicted by the pre-trained third model that the UE hands over to at the next time point.

For example, in some embodiments, after the pre-trained third model predicts the base station that the UE hands over to, if the base station predicted by the pre-trained third model is the same as a current serving base station of the UE, it means that the UE does not need to hand over to the base station at the next time point, and if the base station predicted by the third model is different from the current serving base station of the UE, it means that the UE needs to hand over to the base station at the next time point. In addition, the first device may send the output result of the pre-trained third model to the UE such that the UE performs the base station handover based on the base station predicted by the pre-trained third model.

For example, in some embodiments, the pre-trained third model may be trained in advance. The specific training process of the third model will be described in subsequent embodiments. For example, the third model may be, for example, an LSTM model.

For example, in some embodiments, the above-mentioned inputting at least one set of combined information into the pre-trained third model may include: inputting at least one set of combined information at the current time point and at N time points before the current time point into the pre-trained first model. For example, N may be a positive integer. It should be noted that, since the combined information at each time point is composed of a plurality of information, the content included therein is relatively large, such that N may be a smaller value, thereby reducing the amount of calculation of the pre-trained third model while ensuring the prediction accuracy. For example, N may be equal to 9.

It may be seen from the above content that in the handover predicting method according to embodiments of the disclosure, the first device uses the combined information as the input of the pre-trained third model such that the pre-trained third model performs the handover prediction. The combined information includes the location information of the UE and the received signal strength of the UE, and the combined information also includes "the error location information obtained after introducing an error into the location information" and "the error received signal strength obtained after introducing an error into the received signal strength". Therefore, compared with the handover predicting method based only on the location information or the received signal strength in the related art, the information used in embodiments of the disclosure in performing the handover prediction is more comprehensive, thereby improving the accuracy and performance of the prediction. At the same time, the handover predicting method of the disclosure does not need to simulate a change pattern of the received signal strength as in the method of the related art, such that the amount of calculation required for the prediction is low and the prediction efficiency is high.

In conclusion, in the handover predicting method according to embodiments of the disclosure, the first device may obtain the location information of the UE and the received signal strength of the UE collected by the UE at the at least one time point. The first device may obtain the error location information and the error received signal strength based on the location information and the received signal strength. The location information, the received signal strength, the error location information and the error received signal strength may be combined to obtain at least one group of combined information. The first device may input the at least one group of combined information into the pre-trained third model to obtain the output result of the pre-trained third model. The output result of the pre-trained third model is: the base station predicted by the pre-trained third model that UE hands over to. The pre-trained third model is trained in advance. The information used in embodiments of the disclosure in performing the handover prediction is more comprehensive, thereby improving the accuracy and performance of the prediction. At the same time, the handover predicting method of the disclosure does not need to simulate the change pattern of the received signal strength, such that the amount of calculation required for the prediction is low and the prediction efficiency is high.

FIG. 6A is a flowchart illustrating a handover predicting method according to an embodiment of the disclosure. The method is performed by a first device. As illustrated in FIG. 6A, the handover predicting method may include the following.

At step 601, a third model is trained.

For example, in some embodiments, the method for training the third model may include the following.

At step A, the first device collects location information of a UE at at least one time point and a received signal strength of the UE at the at least one time.

At step B, the first device determines the base station to which the UE hands over based on the location information of the UE collected by the first device at the at least one time point and the received signal strength of the UE collected by the first device at the at least one time point.

At step C, at least one group of combination information at the at least one time point is inputted into a pre-built third model to obtain respective output results corresponding to the at least one group of combination information outputted by the pre-built third model.

For step A to step C, reference may be made to the above embodiments.

At step D, respective second accuracy values between the respective output results corresponding to groups of combined information and the base station determined by the first device are calculated.

For example, in some embodiments, the third model determines a respective second accuracy value for each output result corresponding to each group of combined information. For example, the second accuracy value may reflect: a degree of similarity between the output result corresponding to a group of combined information outputted by the third model and the base station determined by the first device. The higher the second accuracy value corresponding to the output result corresponding to a certain group of combined information, the closer the output result corresponding to the group of combined information is to the base station determined by the first device.

At step E, model parameters of the pre-built third model are adjusted based on the second accuracy values corresponding to the groups of combined information until the output result of the pre-built third model meets a third preset condition, and it is determined that the training of the third model is completed.

For example, in some embodiments, the third preset condition includes at least one of the following:
an average of the respective second accuracy values of the output results corresponding to all combined information being greater than a third threshold (such as 90%); or
a standard deviation of the respective second accuracy values of the output results corresponding to all combined information being less than a fourth threshold (e.g., 0.05).

For example, in the case where the average of the respective second accuracy values of the output results corresponding to all combined information is greater than the third threshold, and/or the standard deviation of the respective second accuracy value of the output results corresponding to all combined information is less than a fourth threshold, it means that the respective output result of each group of combined information outputted by the third model is infinitely close to the base station determined by the first device. At this time, it is considered that the third model is able to accurately predict the base station most suitable for UE to hand over to, and it is confirmed that the training of the third model is completed.

Based on the above steps C to E, FIG. 6B provides a flowchart of training a third model according to an embodiment of the disclosure. As illustrated in FIG. 6B, at least one group of combined information at the at least one time point may be inputted into the pre-trained third model (i.e., an LSTM model) to output the base station predicted by the LSTM model that the UE hands over to for each group of combined information. Thereafter, the base station predicted by the LSTM model is compared with the base station to which the UE hands over determined by the first device, and the model parameters are adjusted based on a comparison result until the output result of the third model meets the second preset condition.

In conclusion, the disclosure provides a method for training the third model, which is usable by the first device to train the third model that may accurately predict the base station to which the UE hands over. The first device may then use the trained third model to perform accurate handover predictions, thereby improving the accuracy and performance of the handover prediction.

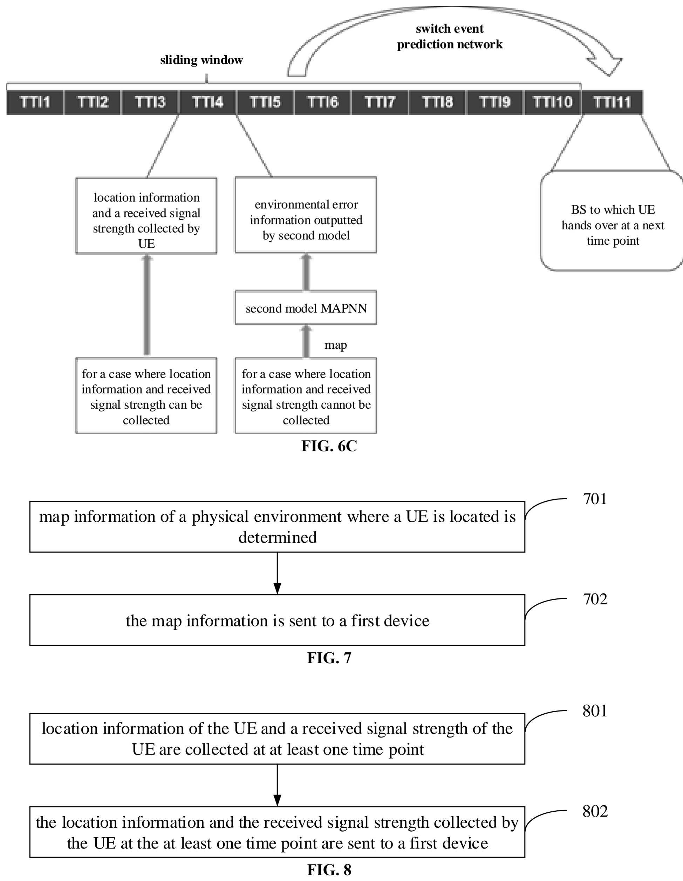

In addition, it may be seen from the afore-mentioned embodiments that the first device mainly predicts the base station to which the UE hands over in the next TTI (i.e., the next time point) based on the information transmitted by the UE in at least one TTI. For the TTI and the information transmitted therein. Reference may be made to the afore-mentioned embodiments. For example, FIG. 6C is a block diagram of how to select a TTI according to an embodiment of the disclosure. Assuming that the TTI corresponding to the current time point is TTI10, the terminal may select TTI10 at the current time point, and thus TTI1-TTI9 are 9 time points before the current time point respectively. The information transmitted in TTI1-TTI10 is used to predict the base station to which the UE hands over at the next time point (i.e., TTI11).

FIG. 7 is a flowchart illustrating a handover predicting method according to an embodiment of the disclosure. The method is performed by a second device. As illustrated in FIG. 7 , the handover predicting method may include the following.

At step 701, map information of a physical environment where a UE is located is determined.

At step 702, the map information is sent to a first device.

For steps 701 and 702, reference may be made to the above embodiments.

In conclusion, in the handover predicting method according to embodiments of the disclosure, the second device may determine the map information of the physical environment in which the UE is located, and may send the map information to the first device, such that the first device may perform the handover prediction based on the map information. It may be seen that the handover predicting method of the disclosure predicts the base station to which the UE hands over based on the map information of the physical environment in which the UE is located, which may fully take into account the environmental factors of the physical environment around the UE. Therefore, the accuracy and performance of the handover prediction may be high. At the same time, in the handover predicting method according to the disclosure, there is no need to use the location information of the UE and/or the received signal strength of the UE. Therefore, even if the UE cannot collect the location information of the UE and/or the received signal strength of the UE, the handover prediction may be implemented for the UE. Therefore, the handover predicting method according to embodiments of the disclosure has a wider applicability and lower restrictions.

FIG. 8 is a flowchart illustrating a handover predicting method according to an embodiment of the disclosure. The method is performed by a UE. As illustrated in FIG. 8 , the handover predicting method may include the following.

At step 801, location information of the UE and a received signal strength of the UE are collected at at least one time point.

At step 802, the location information and the received signal strength collected by the UE at the at least one time point are sent to a first device.

For steps 801 and 802, reference may be made to the above embodiments.

In conclusion, in the handover predicting method according to embodiments of the disclosure, the UE may collect the location information of the UE and the received signal strength of the UE at the at least one time point, and send the location information of the UE and the received signal strength of the UE collected by the UE at the at least one time point to the first device. After the first device receives the location information of the UE and the received signal strength of the UE sent by the UE, the first device may make a handover prediction based on the location information and the received signal strength. The information used in embodiments of the disclosure in making the handover prediction is more comprehensive, thereby improving the accuracy and performance of the prediction. In addition, after the first device receives the location information and the received signal strength sent by the UE, the first device may train the first model based on the location information and the received signal strength to obtain the trained first model that is able to extract the environmental error information of the UE. The first device may use the trained first model to output the environmental error information of the UE based on the map information of the physical environment in which the UE is located, such that the first device may subsequently accurately predict the base station to which the UE hands over based on the environmental error information of the UE, thereby improving the accuracy and performance of the handover prediction.

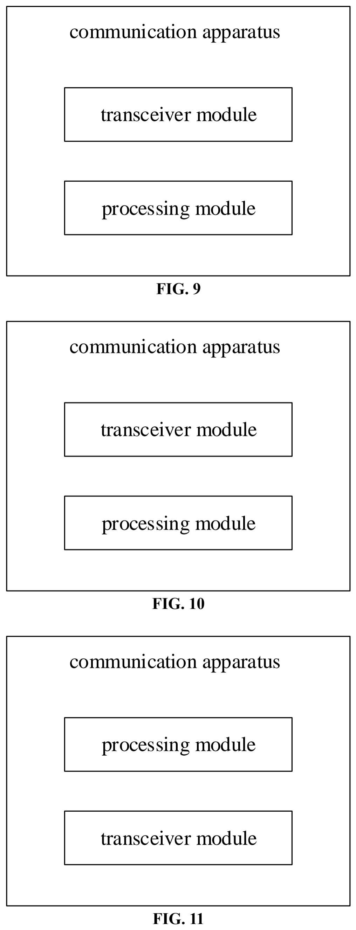

FIG. 9 is a schematic diagram illustrating the structure of a communication apparatus according to an embodiment of the disclosure. As illustrated in FIG. 9, the communication apparatus may include a transceiver module and a processing module.

The transceiver module is configured to receive map information of a physical environment in which a UE is located sent by a second device.

The processing module is configured to predict a base station to which the UE hands over based on the map information.

In conclusion, with the communication device according to embodiments of the disclosure, the first device may receive the map information, sent by the second device, of the physical environment where the UE is located and predict the base station to which the UE hands over based on the map information. It may be seen that the handover predicting method of the disclosure predicts the base station to which the UE hands over based on the map information of the physical environment where the UE is located, which may fully take into account the environmental factors of the physical environment around the UE, such that the accuracy and performance of the handover prediction can be high. At the same time, in the handover predicting method according to the disclosure, there is no need to use the location information of the UE and/or the received signal strength of the UE. Therefore, even if the UE cannot collect the location information of the UE and/or the received signal strength of the UE, the handover prediction may be implemented for the UE, such that the handover predicting method according to embodiments of the disclosure has a wider applicability and lower restrictions.

For example, in an embodiment of the disclosure, the processing module is further configured to input the map information into a pre-trained first model to enable the pre-trained first model to output environmental error information corresponding to the UE, input the environmental error information into a pre-trained second model to obtain an output result of the pre-trained second model. The output result of the pre-trained second model is the base station to which the UE hands over.

For example, in an embodiment of the disclosure, the communication apparatus is further configured to train a first model. The communication apparatus is further configured to acquire location information of the UE and a received signal strength of the UE collected by the first device at at least one time point; acquire location information of the UE and a received signal strength of the UE collected by the UE at at least one time point; adding the location information collected by the UE at the at last one time point to a first error offset value respectively to obtain respective error location information; adding the received signal strength collected by the UE at the at least one time point to a second error offset value to obtain respective error received signal strengths; determining actual environmental error information corresponding to the UE based on the location information collected by the first device, the received signal strength collected by the first device, the location information collected by the UE, the received signal strength collected by the UE, the respective error location information and the respective error received signal strengths; inputting the map information corresponding to the UE into a pre-built first model to obtain an output result of the pre-built first model; calculating a first loss value between the output result of the pre-built first model and the actual environmental error information; and adjusting model parameters of the pre-built first model based on the first loss value until the output result of the pre-built first model meets a first preset condition, and determine that the training of the first model is completed.

For example, in an embodiment of the disclosure, the first preset condition includes: the first loss value between the output result of the pre-built first model and the actual environmental error information being less than a first threshold.

For example, in an embodiment of the disclosure, different first models correspond to different physical environments and are used for outputting environmental error information of different physical environments; and training the first model includes training respective first models for different physical environments.

For example, in an embodiment of the disclosure, the communication apparatus is further configured to training a second model. The communication apparatus is further configured to: determine the environmental error information corresponding to the UE by using the pre-trained first model; determine the base station to which the UE hands over based on the location information of the UE collected by the first device and/or a received signal strength of the UE collected by the first device at the at least one time point; input the environmental error information into a pre-built second model to obtain an output result of the pre-built second model; calculate a first accuracy value between the output result of the pre-built second model and a base station determined by the first device; and adjust model parameters of the pre-built second model based on the first accuracy value until the output result of the pre-built second model meets a second preset condition, and determining that training of the second model is completed.

For example, in an embodiment of the disclosure, the second preset condition includes: the first accuracy value between the output result of the pre-built second model and the base station determined by the first device being greater than a second threshold.

For example, in an embodiment of the disclosure, the first device includes at least one of: a network device or a data analysis server.

For example, in an embodiment of the disclosure, the second device includes at least one of a GNSS or a sensor.

FIG. 10 is a schematic diagram illustrating the structure of a communication apparatus according to an embodiment of the disclosure. As illustrated in FIG. 10 , the communication apparatus may include a transceiver module and a processing module.

The transceiver module is configured to obtain location information and a received signal strength of a UE collected by the UE at at least one time point.

The processing module is configured to obtain error position information and an error received signal strength based on the location information and the received signal strength.

The processing module is further configured to combine the location information and the received signal strength with the error position information and the error received signal strength to obtain at least one group of combined information.

The processing module is also configured to input the at least one group of combined information into a pre-trained third model to obtain an output result of the pre-trained third model. The output result of the pre-trained third model is a base station predicted by the pre-trained third model that UE hands over to.

In conclusion, in the communication apparatus according to embodiments of the disclosure, the first device may obtain the location information of the UE at the at least one time point and the received signal strength of the UE at the at least one time point sent by the UE. The location information of the UE and the received signal strength of the UE are collected by the UE. Thereafter, the first device may introduce errors into the location information and received signal strength at each time point respectively to obtain the error location information and error received signal strength at each time point, and combine the location information and the received signal strength at each time point with the error location information and the error received signal strength to obtain at least one group of combined information at each time point. The first device may input the at least one grout of combined information at the at least one time point into a pre-trained third model to obtain the output result of the pre-trained third model. The output result of the pre-trained third model is the base station predicted by the pre-trained third model that UE hands over to. The pre-trained third model is trained in advance. The information used in embodiments of the disclosure in performing the handover prediction is more comprehensive, thereby improving the accuracy and performance of the prediction.

For example, in an embodiment of the disclosure, the processing module is configured to perform at least one of the following: combining the location information and the received signal strength at the same time to obtain a first group of combined information; combining the position information and the error received signal strength at the same time to obtain a second group of combined information; combining the error location information and the received signal strength at the same time to obtain a third group of combined information; and combining the error location information and the error received signal strength at the same time to obtain a fourth group of combined information.

For example, in an embodiment of the disclosure, the communication apparatus is further configured to: training a third model. Training the third model includes acquiring location information of the UE and the received signal strength of the UE collected by the first device at the at least one time point; determining, by the first device, a base station to which the UE hands over based on the location information of the UE collected by the first device at the at least one time point and the received signal strength of the UE collected by the first device at the at least one time point; inputting at least one group of combined information at the at least one time point into a pre-built third model to obtain a respective output result corresponding to each group of combined information outputted by the pre-built third model; calculating respective second accuracy values between respective output results corresponding to groups of combined information and the base station determined by the first device; and adjusting model parameters of the pre-built third model based on the respective second accuracy values corresponding to the groups of combined information until the output result of the pre-built third model meets a third preset condition, and determining that training of the third model is completed.

For example, in an embodiment of the disclosure, the third preset condition includes at least one of: an average of the respective second accuracy values corresponding to all groups of combined information being greater than a third threshold, or a standard deviation of the respective second accuracy values corresponding to all groups of combined information being less than a fourth threshold.

FIG. 11 is a schematic diagram illustrating the structure of a communication apparatus according to an embodiment of the disclosure. As illustrated in FIG. 11, the communication apparatus may include a processing module and a transceiver module.

The processing module is configured to determine map information of a physical environment where a UE is located.

The transceiver module is used to send the map information to a first device.

In conclusion, in the communication apparatus according to embodiments of the disclosure, the second device may determine the map information of the physical environment in which the UE is located, and send the map information to the first device, such that the first device may perform a handover prediction based on the map information. It may be seen that the handover predicting method of the disclosure predicts the base station to which the UE hands over based on the map information of the physical environment in which the UE is located, which may fully take into account the environmental factors of the physical environment around the UE, such that the accuracy and performance of the handover prediction may be high. At the same time, in the handover predicting according to the disclosure, there is no need to use the location information of the UE and/or the received signal strength of the UE. Therefore, even if the UE cannot collect the location information of the UE and/or the received signal strength of the UE, the handover prediction may be implemented for the UE, such that the handover predicting method according to embodiments of the disclosure has a wider applicability and lower restrictions.

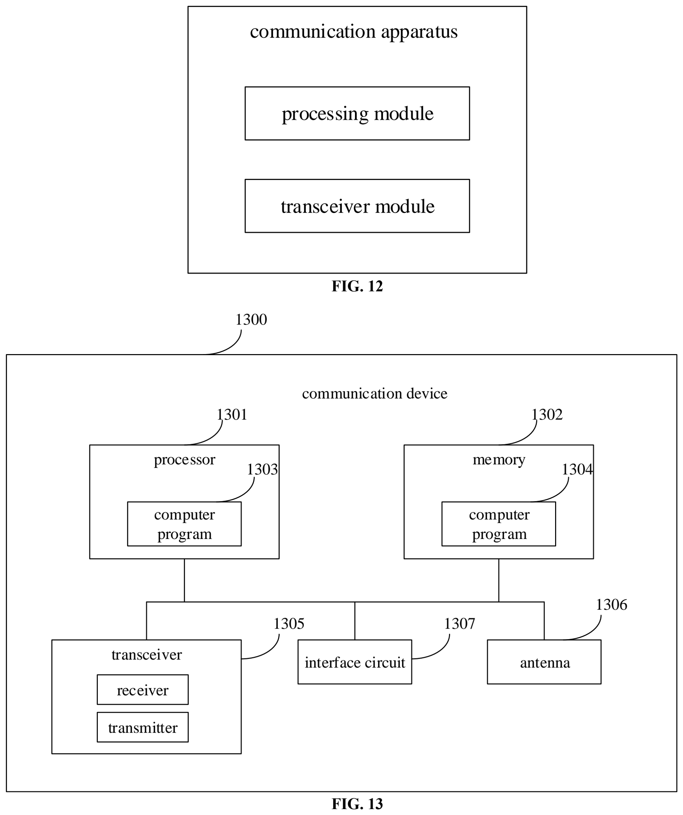

FIG. 12 is a schematic diagram illustrating the structure of a communication apparatus according to embodiments of the disclosure. As illustrated in FIG. 12, the communication apparatus may include a processing module and a transceiver module.

The processing module is configured to collect location information and received signal strength of the UE at at least one time point.

The transceiver module is configured to send the location information and received signal strength collected by the UE at the at least one time point to a first device.

In conclusion, in the communication apparatus according to embodiments of the disclosure, the UE may collect the location information and the received signal strength of the UE at the at least one time point, and send the location information and the received signal strength collected by the UE at the at least one time point to the first device. After the first device receives the location information and the received signal strength sent by the UE, the first device may perform the handover prediction based on the location information and the received signal strength. In performing the handover prediction, the information used in embodiments of the disclosure is more comprehensive, thereby improving the accuracy and performance of the prediction. In addition, after the first device receives the location information and the received signal strength sent by the UE, the first device may train the first model based on the location information and the received signal strength to obtain a trained first model that is able to extract the environmental error information of the UE. The first device may use the trained first model to output the environmental error information of the UE based on the map information of the physical environment in which the UE is located, such that the first device may subsequently accurately predict the base station to which the UE hands over based on the environmental error information of the UE, thereby improving the accuracy and performance of the handover prediction.

FIG. 13 is a schematic diagram illustrating the structure of a communication device 1300 according to an embodiment of the disclosure. The communication device 1300 may be a base station, a terminal, a chip, chip system or processor that supports the base station to implement the above methods, or a chip, chip system or processor that supports the terminal to implement the above methods. The device may be used to implement the methods described in the above method embodiments, and for the details, reference may be made to the description in the above method embodiments.

The communication device 1300 may include one or more processors 1301. The processor 1301 may be a general-purpose processor or a dedicated processor. For example, the processor 1301 may be a baseband processor or a central processing unit. The baseband processor may be used to process the communication protocol and communication data, and the central processing unit may be used to control the communication device (such as a base station, a baseband chip, a terminal, a terminal chip, a DU or a CU, etc.), execute a computer program, and process the data of the computer program.

For example, the communication device 1300 may further include one or more memories 1302, on which a computer program 1304 may be stored. The processor 1301 executes the computer program 1304 such that the communication device 1300 performs the methods described in the above method embodiments. For example, data may also be stored in the memory 1302. The communication device 1300 and the memory 1302 may be provided separately or integrated together.

For example, the communication device 1300 may further include a transceiver 1305 and an antenna 1306. The transceiver 1305 may be referred to as a transceiver unit, a transceiver machine, or a transceiver circuit, and is configured to implement a transceiver function. The transceiver 1305 may include a receiver and a transmitter. The receiver may be referred to as a receiver machine or a receiving circuit, and is configured to implement a receiving function. The transmitter may be referred to as a transmitter machine or a transmitting circuit, and is configured to implement a transmitting function.

For example, the communication device 1300 may further include one or more interface circuits 1307. The interface circuit 1307 is configured to receive code instructions and transmit them to the processor 1301. The processor 1301 runs the code instructions to enable the communication device 1300 to perform the methods described in the above method embodiments.

In an implementation, the processor 1301 may include a transceiver for implementing the receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be used for reading and writing code/data, or the above-mentioned transceiver circuit, interface, or interface circuit may be used for transmitting or delivering signals.

In an implementation, the processor 1301 may store a computer program 1303, which runs on the processor 1301 and enables the communication device 1300 to perform the methods described in the above method embodiments. The computer program 1303 may be fixed in the processor 1301, in which case the processor 1301 may be implemented by hardware.

In an implementation, the communication device 1300 may include a circuit that may implement the sending, receiving or communicating functions in the aforementioned method embodiments. The processor and transceiver described in the disclosure may be implemented in an integrated circuit (IC), an analog IC, a radio frequency integrated circuit (RFIC), a mixed signal IC, an application-specific integrated circuit (ASIC), a printed circuit board (PCB), an electronic device, etc. The processor and transceiver may also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a base station or a terminal, but the scope of the communication device described in the disclosure is not limited thereto, and the structure of the communication device may not be limited by FIG. 13. The communication device may be an independent device or may be part of a larger device. For example, the communication device may be:
(1) Independent integrated circuit (IC), chip, chip system or subsystem;
(2) A set of one or more ICs, for example, the set may also include a storage component for storing data and computer programs;
(3) ASIC, such as modem;
(4) Modules that may be embedded in other devices;
(5) Receivers, terminals, smart terminals, cellular phones, wireless devices, handheld devices, mobile units, vehicle-mounted devices, base stations, cloud devices, artificial intelligence devices, etc.;
(6)Others.

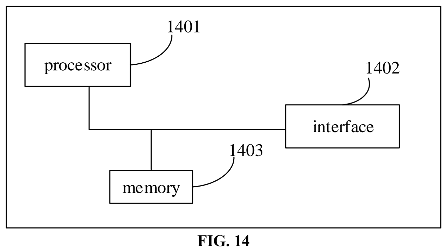

For the case where the communication device may be a chip or a chip system, reference may be made to the schematic diagram of the chip structure illustrated in FIG. 14. The chip illustrated in FIG. 14 includes a processor 1401 and an interface 1402. The number of processors 1401 may be one or more, and the number of interfaces 1402 may be multiple.

For example, the chip further includes a memory 1403. The memory 1403 is configured to store necessary computer programs and data.

Those skilled in the art may also understand that the various illustrative logical blocks and steps listed in embodiments of the disclosure may be implemented by electronic hardware, computer software, or a combination of the two. Whether such functions are implemented by hardware or software depends on the specific application and the design requirements of the entire system. Those skilled in the art may use various methods to implement the functions described for each specific application, but such implementation should not be understood as exceeding the scope of protection of embodiments of the disclosure.

The disclosure also provides a readable storage medium having instructions stored thereon, which implement the functions of any of the above method embodiments when executed by a computer.

The disclosure also provides a computer program product, which implements the functions of any of the above method embodiments when executed by a computer.

The above embodiments may be implemented in whole or in part by software, hardware, firmware or any combination thereof. When implemented by software, it may be implemented in whole or in part in the form of a computer program product. The computer program product includes one or more computer programs. When the computer program is loaded and executed on a computer, the process or function described in embodiments of the disclosure is generated in whole or in part. The computer may be a general-purpose computer, a special-purpose computer, a computer network, or other programmable device. The computer program may be stored in a computer-readable storage medium, or transmitted from one computer-readable storage medium to another computer-readable storage medium. For example, the computer program may be transmitted from a website site, computer, server or data center by wired (e.g., coaxial cable, optical fiber, digital subscriber line (digital subscriber line, DSL)) or wireless (e.g., infrared, wireless, microwave, etc.) mode to another website site, computer, server or data center. The computer-readable storage medium may be any available medium that a computer may access or a data storage device such as a server or data center that includes one or more available media integrated. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

Those skilled in the art may understand that the various numerical numbers such as first and second involved in the disclosure are only used for distinction for convenience of description and are not used to limit the scope of embodiments of the disclosure. Also they may indicate the order of precedence.

"At least one" in the disclosure may also be described as one or more, and "a plurality of" may be two, three, four or more, which is not limited in the disclosure. In embodiments of the disclosure, for a kind of technical features, the technical features are distinguished by "first", "second", "third", "A", "B", "C", "D" and so on, and there is no order of precedence or size between the technical features described by the "first", "second", "third", "A", "B", "C" and "D".

The correspondence shown in tables in the disclosure may be configured or predefined. The values of the information in each table are only examples and may be configured as other values, which are not limited by the disclosure. When configuring the correspondence between the information and each parameter, it is not necessarily required to configure all the correspondences illustrated in each table. For example, in the table in the disclosure, the correspondences shown in some rows may not be configured. As another example, appropriate deformation adjustments may be made based on the above tables, such as splitting, merging, etc. The parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hash lists.

The term "predefined" in the disclosure may be understood as defined, defined in advance, stored, pre-stored, pre-negotiated, pre-configured, solidified, or pre-burned.

Those skilled in the art will appreciate that the units and algorithm steps of each example described in conjunction with embodiments of the disclosure herein may be implemented in electronic hardware, or a combination of computer software and electronic hardware. Whether these functions are performed in hardware or software depends on the specific application and design constraints of the technical solution. Professional and technical personnel may use different methods to implement the described functions for each specific application, but such implementation should not be considered to be beyond the scope of the disclosure.

Those skilled in the art may clearly understand that, for the convenience and brevity of description, for the specific working processes of the systems, devices and units described above, reference may be made to the corresponding processes in the aforementioned method embodiments which is not be repeated here.

The above is only specific embodiments of the disclosure, but the protection scope of the disclosure is not limited thereto. Any person skilled in the art who is familiar with the technical field may easily think of changes or substitutions within the technical scope of disclosure, which should be included in the protection scope of the disclosure. Therefore, the protection scope of the disclosure should be based on the protection scope of the claims.

## Claims

1. A handover predicting method, performed by a first device, the method comprising:
receiving map information of a physical environment in which a user equipment (UE) is located, sent by a second device; and
predicting a base station to which the UE hands over based on the map information.

2. The method of claim 1, wherein predicting the base station to which the UE hands over based on the map information comprises:
inputting the map information into a pre-trained first model to enable the pre-trained first model to output environmental error information corresponding to the UE;
inputting the environmental error information into a pre-trained second model to obtain an output result of the pre-trained second model, wherein the output result of the pre-trained second model indicates the base station to which the UE hands over.

3. The method of claim 1, further comprising:
training a first model,
wherein training the first model comprises:
acquiring location information of the UE and a received signal strength of the UE collected by the first device at at least one time point;
acquiring location information of the UE and a received signal strength of the UE collected by the UE at at least one time point;
adding the location information collected by the UE at the at least one time point and a first error offset value respectively to obtain respective error location information;
adding the received signal strength collected by the UE at the at least one time point and a second error offset value respectively to obtain respective error received signal strengths;
determining actual environmental error information corresponding to the UE based on the location information collected by the first device, the received signal strength collected by the first device, the location information collected by the UE, the received signal strength collected by the UE, the respective error location information, and the respective error received signal strengths;
inputting the map information corresponding to the UE into a pre-built first model to obtain an output result of the pre-built first model;
calculating a first loss value between the output result of the pre-built first model and the actual environmental error information; and
adjusting model parameters of the pre-built first model based on the first loss value until the output result of the pre-built first model meets a first preset condition, and determining that training of the first model is completed.

4. The method of claim 3, wherein the first preset condition comprises: the first loss value between the output result of the pre-built first model and the actual environmental error information being less than a first threshold.

5. The method of claim 2, wherein different first models correspond to different physical environments and are used for outputting environmental error information of different physical environments; and
wherein training the first model comprises:
training respective first models for different physical environments.

6. The method of any one of claims 2 to 5, further comprising:
training a second model,
wherein training the second model comprises:
determining the environmental error information corresponding to the UE by using the pre-trained first model;
determining the base station to which the UE hands over based on the location information of the UE collected by the first device and/or a received signal strength of the UE collected by the first device at the at least one time point;
inputting the environmental error information into a pre-built second model to obtain an output result of the pre-built second model;
calculating a first accuracy value between the output result of the pre-built second model and a base station determined by the first device; and
adjusting model parameters of the pre-built second model based on the first accuracy value until the output result of the pre-built second model meets a second preset condition, and determining that training of the second model is completed.

7. The method of claim 6, wherein the second preset condition comprises the first accuracy value between the output result of the pre-built second model and the base station determined by the first device being greater than a second threshold.

8. The method of any one of claims 1 to 7, wherein the first device comprises at least one of:
a network device; or
a data analysis server.

9. The method of any one of claims 1 to 8, wherein the second device comprises at least one of:
a global navigation satellite system (GNSS); or
a sensor.

10. A handover predicting method, performed by a first device, the method comprising:
acquiring location information of a user equipment (UE) and a received signal strength of the UE collected by the UE at at least one time point;
acquiring error location information and an error received signal strength based on the location information and the received signal strength;
combining the location information and the received signal strength with the error location information and the error received signal strength to obtain at least one group of combined information;
inputting the at least one group of combined information into a pre-trained third model to obtain an output result of the pre-trained third model, wherein the output result of the pre-trained third model is a base station predicted by the pre-trained third model that the UE hands over to.

11. The method of claim 10, wherein combining the location information and the received signal strength with the error location information and error received signal strength to obtain the at least one group of combined information comprises at least one of:
combining the location information and the received signal strength at the same time point to obtain a first group of combined information;
combining the location information and the error received signal strength at the same time point to obtain a second group of combined information;
combining the error location information and the received signal strength at the same time point to obtain a third group of combined information; and
combining the error location information and the error received signal strength at the same time point to obtain a fourth group of combined information.

12. The method of claim 10 or 11, further comprising:
training a third model,
wherein training the third model comprises:
acquiring location information of the UE and the received signal strength of the UE collected by the first device at the at least one time point;
determining, by the first device, a base station to which the UE hands over based on the location information of the UE collected by the first device at the at least one time point and the received signal strength of the UE collected by the first device at the at least one time point;
inputting at least one group of combined information at the at least one time point into a pre-built third model to obtain a respective output result corresponding to each group of combined information outputted by the pre-built third model;
calculating respective second accuracy values between respective output results corresponding to groups of combined information and the base station determined by the first device;
adjusting model parameters of the pre-built third model based on the respective second accuracy values corresponding to the groups of combined information until the output result of the pre-built third model meets a third preset condition, and determining that training of the third model is completed.

13. The method of claim 12, wherein the third preset condition comprises at least one of:
an average of the respective second accuracy values corresponding to all groups of combined information being greater than a third threshold; or
a standard deviation of the respective second accuracy values corresponding to all groups of combined information being less than a fourth threshold.

14. A handover predicting method, performed by a second device, the method comprising:
determining map information of a physical environment in which a user equipment (UE) is located; and
sending the map information to a first device.

15. A handover predicting method, performed by a user equipment (UE), the method comprising:
collecting location information of the UE and a received signal strength of the UE at at least one time point; and
sending the location information and the received signal strength collected by the UE at the at least one time point to the first device.

16. A communication apparatus, comprising:
a transceiver module, configured to receive map information of a physical environment in which a user equipment (UE) is located sent by a second device; and
a processing module, configured to predict a base station to which the UE hands over based on the map information.

17. A communication apparatus, comprising:
a transceiver module, configured to obtain location information of a user equipment (UE) and a received signal strength of the UE collected by the UE at at least one time point; and
a processing module, configured to obtain error location information and an error received signal strength based on the location information and the received signal strength;
wherein the processing module is further configured to combine the location information and the received signal strength with the error location information and the error received signal strength to obtain at least one group of combined information; and
the processing module is further configured to input the at least one group of combined information into a pre-trained third model to obtain an output result of the pre-trained third model, wherein the output result of the pre-trained third model is a base station predicted by the pre-trained third model that the UE hands over to.

18. A communication apparatus, comprising:
a processing module, configured to determine map information of a physical environment where a user equipment (UE) is located; and
a transceiver module, configured to send the map information to a first device.

19. A communication apparatus, comprising:
a processing module, configured to collect location information and a received signal strength of a user equipment (UE) at at least one time point; and
a transceiver module, configured to send the location information and the received signal strength collected by the UE at the at least one time point to a first device.

20. A communication device, comprising a processor and a memory, wherein the memory has a computer program stored therein, and the processor is configured to execute the computer program stored in the memory to enable the communication device to perform the method of any one of claims 1 to 9, to execute the computer program stored in the memory to enable the communication device to perform the method of any one of claims 10 to 13, to execute the computer program stored in the memory to enable the communication device to perform the method of claim 14, or to execute the computer program stored in the memory to enable the communication device to perform the method of claim 15.

21. A communication device, comprising: a processor and an interface circuit,
wherein the interface circuit is configured to receive code instructions and transmit the code instructions to the processor; and
the processor is configured to run the code instructions to perform the method of any one of claims 1 to 9, or to run the code instructions to perform the method of any one of claims 10 to 13, to run the code instructions to perform the method of claim14, or to run the code instructions to perform the method of claim 15.

22. A computer-readable storage medium, having instructions stored thereon, wherein when the instructions are executed, the method of any one of claims 1 to 9, method of any one of claims 10 to 13, the method of claim 14, or the method of claim 15 is implemented.
